# EUROPEAN PATENT APPLICATION

(11) **EP 4 807 590 A1**
(43) Date of publication of application: **16.09.2026**
(21) Application number: 24901039.8
(22) Date of filing: 04.12.2024
(51) Int. Cl.: G06F 21/32, G06F 21/35, G06F 21/45, H04L 9/40

(54) **SYSTEM FOR BIOMETRIC AUTHENTICATION AND OPERATION METHOD THEREOF**

(30) Priority: 08.12.2023 KR 20230177950; 19.01.2024 KR 20240008966
(71) Applicant: Samsung Electronics Co., Ltd., Suwon-si, Gyeonggi-do 16677 (KR)
(72) Inventor: LEE, Youngjae, Suwon-si Gyeonggi-do 16677 (KR); DO, Sangyeol, Suwon-si Gyeonggi-do 16677 (KR); CHANG, Moonsoo, Suwon-si Gyeonggi-do 16677 (KR)
(74) Representative: Gulde & Partner
(86) International application number: PCT/KR2024/019639
(87) International publication number: WO 2025/121853

(57) **Abstract**

A system according to an embodiment may include an electronic device having a biometric recognition module and an external device connected to the electronic device. While the electronic device and the external device are connected through wireless communication, the electronic device may provide the external device with a biometric data template obtained from the biometric recognition module. The external device may store a remote authentication template obtained by assigning a plurality of attributes to the biometric data template. The external device may transmit the remote authentication template to the electronic device in response to an application execution request from a user. The electronic device may check a validity of the remote authentication template, based on a comparison between the remote authentication template and the biometric data template. The external device may request biometric authentication from the electronic device, based on the validity checked from the electronic device, and execute the application, based on a result of biometric authentication of the electronic device.

## Description

### [Technical Field]

The disclosure relates to a system for biometric authentication, and an operating method thereof.

### [Background Art]

Recently, mass-produced smartphones are equipped with biometric recognition devices such as fingerprint sensors, and biometric information is utilized in an authentication process for unlocking functions, high-security purchases and payments, and deposit/withdrawal and remittance services. In a case where a relatively low level of security is required, a user may perform authentication by using numbers, codes, or patterns.

On the other hand, devices such as desktop computers or smart televisions (TVs) are generally not provided with biometric recognition devices like smartphones, and thus perform only authentication using numbers, codes, or patterns. Accordingly, although such devices provide functions similar to those of smartphones, they are relatively more vulnerable in terms of security.

In order to address this issue, a method of performing authentication by connecting a biometric recognition device to a desktop computer or a smart TV via a wired or wireless connection may be considered. However, such a method has disadvantages in that additional hardware shall be purchased and an application for enabling compatibility between the hardware and the device shall be additionally installed.

### [Disclosure of Invention]

### [Solution to Problem]

A system according to an embodiment may include an electronic device having a biometric recognition module and an external device connected to the electronic device. While the electronic device and the external device are connected through wireless communication, the electronic device may provide the external device with a biometric data template obtained from the biometric recognition module. The external device may store a remote authentication template obtained by assigning a plurality of attributes to the biometric data template. The external device may transmit the remote authentication template to the electronic device in response to an application execution request from a user. The electronic device may check a validity of the remote authentication template, based on a comparison between the remote authentication template and the biometric data template. The external device may request biometric authentication from the electronic device, based on the validity checked from the electronic device, and execute the application, based on a result of biometric authentication of the electronic device.

An external device according to an embodiment may include a processor and a memory storing at least one instruction executable by the processor. The at least one instruction may cause the external device to receive, from the electronic device, a biometric data template obtained from the biometric recognition module, store a remote authentication template obtained by assigning a plurality of attributes to the biometric data template, transmit the remote authentication template to the electronic device in response to an application execution request from a user, receive, from the electronic device, a validity check result of the remote authentication template based on a comparison between the remote authentication template and the biometric data template, and request biometric authentication from the electronic device, based on the validity, and execute the application, based on a result of biometric authentication of the electronic device.

A recording medium according to an embodiment may be a non-transitory computer-readable recording medium storing instructions which, when executed by at least one processor, cause the at least one processor to perform configured operations. The operations may be configured to receive, from the electronic device, a biometric data template obtained from the biometric recognition module, store a remote authentication template obtained by assigning a plurality of attributes to the biometric data template, transmit the remote authentication template to the electronic device in response to an application execution request from a user, receive, from the electronic device, a validity check result of the remote authentication template based on a comparison between the remote authentication template and the biometric data template, and request biometric authentication from the electronic device, based on the validity, and execute the application, based on a result of biometric authentication of the electronic device.

### [Brief Description of Drawings]

FIG. 1 is a block diagram illustrating control between an electronic device and an external device according to an embodiment;
FIG. 2 is a flowchart illustrating a system including an electronic device and an external device according to an embodiment;
FIG. 3 is a signal flow diagram illustrating a process of registering a remote authenticator template in an external device according to an embodiment;
FIG. 4 is a signal flow diagram illustrating an authentication process of a system according to an embodiment;
FIG. 5 illustrates a case where a system includes a plurality of electronic devices according to an embodiment;
FIG. 6 is a signal flow diagram illustrating operations performed in FIG. 5;
FIG. 7 illustrates a case where a plurality of external devices are included in a system according to an embodiment;
FIG. 8 is a signal flow diagram illustrating operations performed in FIG. 7;
FIG. 9 illustrates a case where a failure occurs in a system according to an embodiment;
FIG. 10 illustrates a payment processing procedure in a system according to an embodiment;
FIG. 11 is a signal flow diagram of a payment system according to an embodiment;
FIG. 12 is a signal flow diagram of a system, when an external device is a video-see-through (VST) device, according to an embodiment; and
FIG. 13 is a block diagram of an electronic device in a network environment, according to one or more embodiments.

### [Mode for the Invention]

Embodiments of the disclosure will be described herein below with reference to the accompanying drawings. Advantages and features of the disclosure and methods of accomplishing the same may be understood more clearly by reference to the following detailed description of the embodiments and the accompanying drawings. However, the disclosure is not limited to embodiments disclosed below, and may be implemented in various forms. Rather, the embodiments are provided to complete the disclosure and to fully convey the concept of the disclosure to one of those ordinarily skilled in the art, and the disclosure will only be defined by the scope of claims. Throughout the specification, like reference numerals denote like components.

Unless otherwise defined, all terms used in this specification (including technical and scientific terms) may be used with the meanings commonly understood by those of ordinary skill in the art to which the disclosure pertains. In addition, terms defined in commonly used dictionaries shall not be ideally or excessively interpreted unless explicitly specifically defined. The term used in this specification is for the purpose of describing embodiments only and is not intended to limit the scope of the disclosure. As used in this specification, a singular form includes a plural form unless the context explicitly indicates otherwise.

As used herein, the terms "comprise" and/or "comprising" are intended to specify the presence of stated elements, steps, operations, and/or components, but do not preclude the presence or addition of one or more other elements, steps, operations, and/or components.

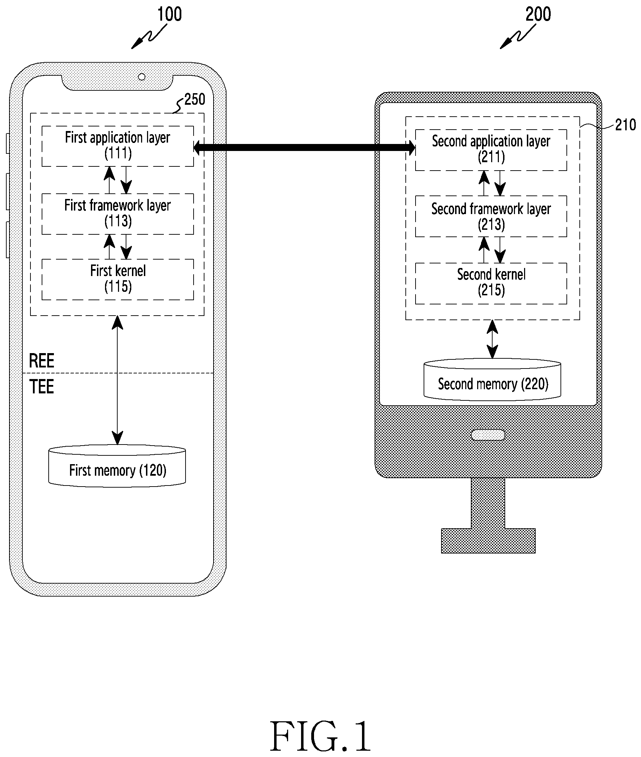

FIG. 1 is a block diagram illustrating control between an electronic device 100 and an external device 200 according to an embodiment.

As used herein, the electronic device 100 refers to a device having a biometric sensor (not shown) therein, and the external device 200 refers to a device having no biometric sensor.

The electronic device 100 may receive biometric data input from a user through the biometric sensor. Based on a result obtained by inputting the received biometric data (hereinafter, "input biometric data") to a designated statistical model or engine, the electronic device 100 may authenticate the input biometric data. The designated statistical model or engine may be stored in a memory of the electronic device 100 (e.g., a memory 120 of FIG. 1) and may be a model or engine (hereinafter, a "matching model") used for authentication of biometric data (for example, verifying whether the input biometric data matches stored biometric data). Authentication of biometric information according to an embodiment may be performed through an external server (e.g., fast identity online (FIDO)).

In an embodiment, when the input biometric data is authenticated (or when the input biometric data matches the stored biometric data), the electronic device 100 may provide the user with a specific service requested to be executed.

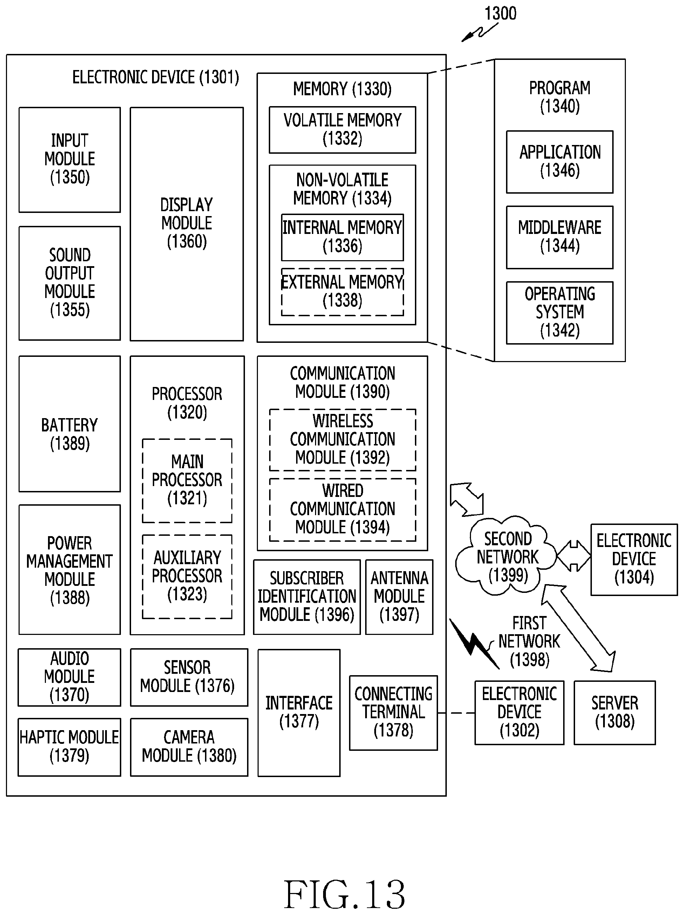

The biometric sensor according to an embodiment may obtain user's biometric information. The user's biometric information may include, for example, fingerprint, iris, facial image, voice, heart rate, or blood pressure information. The electronic device 100 may obtain the user's biometric information through the biometric sensor. For example, the electronic device 100 may obtain user's fingerprint information through a fingerprint sensor. Alternatively, the electronic device 100 may obtain user's iris information through a camera module 1380 of FIG. 13. A processor 110 connected to the biometric sensor may display a user interface (UI) for obtaining the user's biometric information through a display 1360 of FIG. 13.

Meanwhile, the external device 200 according to an embodiment refers to a general device which is not provided with a biometric sensor. For example, the external device 200 may refer to any device, such as a desktop computer or a TV, which is not typically equipped with a fingerprint sensor or an iris sensor (not shown), or which is not equipped with a sensor capable of functioning as a biometric sensor, such as a camera. According to an embodiment, the external device 200 may include home appliances such as a refrigerator, a washing machine, and an air conditioner. However, the external device 200 may exceptionally include the biometric sensor, and an example thereof may be a head mounted device (HMD) such as a video-see-through (VST) device. For example, when the external device 200 is the VST device, the VST device may include only an iris sensor without including a fingerprint sensor.

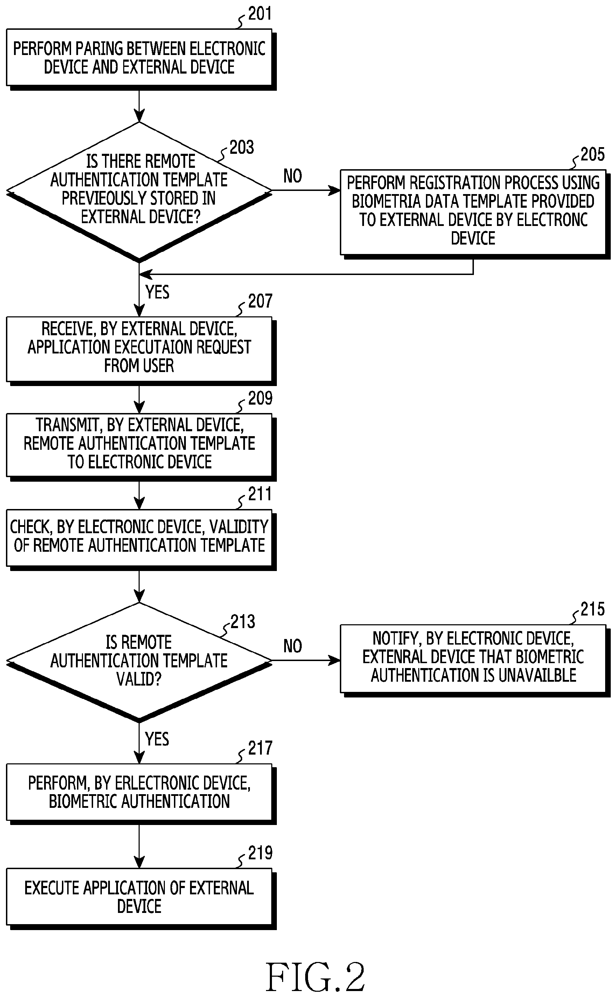

Referring to FIG. 2, the electronic device 100 may include a first processor 110 and a first memory 120.

The processor 110 (i.e., a first processor) may include, for example, a rich execution environment (REE) and/or a trusted execution environment (TEE). The processor 110 may process data requiring a relatively high level of security through the TEE. The REE and the TEE may be implemented, for example, in a physically separated form, a software-separated form, or a form utilizing both physical separation and software separation. The TEE may be connected to separate security hardware (not shown), for example, through a secure channel. For example, the security hardware may include an embedded secure element (eSE) and/or a secure processor or the like.

For example, the processor 110 may access the security hardware through the TEE and/or the secure channel rather than through the REE. The processor 110 may store or execute information or programs requiring a relatively high level of security in a security circuit through the TEE and the secure channel. The REE may perform ordinary computational tasks having relatively low relevance to security. The REE may include one or more of a central processing unit (CPU), an application processor (AP), and a communication processor (CP). The REE may perform data processing or computations related to control and/or communication with at least one other component (e.g., a memory, a communication interface, or the like) of the electronic device 100.

The REE may receive an encrypted secure program and additional information related to the encrypted secure program from an external device (e.g., an external server, a desktop PC, a laptop, or a short-range wireless communication device). The REE may provide the encrypted secure program or the additional information to the TEE.

The REE may include a first application layer 111, a first framework layer 113, and a first kernel 115.

The first application layer 111 may include, for example, an operating system (OS) for controlling resources related to an electronic device (e.g., the electronic device 100) and/or various applications running on the OS.

The first framework layer 113 may process one or more task requests received from the application layer 111 according to a priority. The framework layer 113 may perform scheduling or load balancing for the one or more task requests by processing the one or more task requests according to the priority. In various embodiments, the framework layer 113 may include libraries required for operating the REE.

The first kernel 115 may control or manage system resources (e.g., a bus, a processor, or a memory) used to execute operations or functions implemented in other programs (e.g., the framework layer or the application layer). In various embodiments, the kernel 115 may include a driver for operating the TEE.

The TEE may be, for example, an area for performing secure data communication. For example, the processor 110 may provide a security circuit with security programs or computations related to processing of data (e.g., payment information) associated with security. In various embodiments, the TEE may have a secret key shared with the security circuit, and may establish a channel through which encrypted data may be transmitted to and received from the security circuit by using the key.

Although all components of the electronic device 100 are illustrated as being included in a single electronic device, embodiments according to the disclosure are not limited thereto. For example, depending on a role, function, or performance of the electronic device 100, at least some of the components of the electronic device 100 may be implemented in a distributed manner between the electronic device 100 and an external electronic device.

The external device 200 may include a second processor 210 and a second memory 220.

The second processor 210 may include the REE. The second processor 210 may process data requiring a relatively low level of security through the REE.

The REE may include a second application layer 211, a second framework layer 213, a second kernel 215, and a second memory 220.

The second application layer 211 may include, for example, an OS for controlling resources related to the external device 200 and/or various applications running on the OS.

The second framework layer 213 may process one or more task requests received from the second application layer 211 according to a priority. The second framework layer 213 may perform scheduling or load balancing for the one or more task requests by processing the one or more task requests according to the priority. In various embodiments, the second framework layer 213 may include libraries required for operating the REE.

The second kernel 215 may control or manage system resources (e.g., a bus, a processor, or a memory) used to execute operations or functions implemented in other programs (e.g., the framework layer or the application layer). In various embodiments, the kernel 215 may include a driver for operating the TEE.

Meanwhile, the electronic device 100 and the external device 200 may be paired or connected through wired or wireless communication using BT, BLE, WiFi, ZIGBEE, USB, IEEE 1394, or the like. In this case, a protocol such as secure device connection protocol (SDCP) may be used for security during transmission and reception of data between the electronic device 100 and the external device 200. According to an embodiment, the electronic device 100 may provide the electronic device 200 with biometric data for registration and authentication.

The first memory 120 according to an embodiment may temporarily store a biometric data template in order to encrypt and decrypt the biometric data template used for authentication of biometric data. The biometric data template may refer to user biometric data (e.g., a fingerprint image or an iris image) input by the user and stored in the electronic device 100 prior to an authentication process, and may include biometric data input during biometric information registration and biometric data input during a biometric authentication attempt.

The electronic device 100 according to an embodiment may provide the external device 200 with the biometric data template obtained from a biometric recognition module. The external device 200 according to an embodiment may convert the biometric data template into a remote authenticator template, which is a new format, and store the converted template in the second memory 220.

The external device 200 according to an embodiment may include a remote authenticator daemon (RA daemon) at a level of the second application layer 211 or the second framework layer 213. The RA daemon may store the remote authenticator template in the second memory 220 in order to manage information and history included in the biometric data template received from the electronic device 100.

The remote authenticator template according to an embodiment may include information (data) obtained by classifying device information of the electronic device 100 and/or information regarding a biometric data template received from the electronic device 100 into a plurality of attributes.

For example, the plurality of attributes may include a universally unique identifier (UUID) as a unique value which identifies the electronic device 100, a DisplayName as a name which enables the user to distinguish the electronic device 100 by using the UUID (e.g., S21 of user A), an Authenticator ID as a unique value which changes whenever biometric information of the electronic device 100 is changed, and Enrollments indicating index information of registered biometric data. The UUID may be used to identify the electronic device 100, and may be provided in the form of DisplayName so as to be provided user-friendly in the electronic device 100 or the external device 200.

The remote authenticator template according to an embodiment may include first data corresponding to a first attribute (UUID) for identifying the electronic device 100, second data (Authenticator ID) corresponding to a second attribute indicating that a biometric data template registered in the electronic device 100 has been changed, and third data corresponding to a third attribute (Enrollments) which is index information of the registered biometric data template.

The Authenticator ID is a unique value which changes whenever biometric information (a biometric data template) of the electronic device 100 is changed, and is used to address a situation in which biometric data is changed regardless of an intention of an owner of the electronic device 100, such as when another person registers new biometric information (a fingerprint or an iris) without the owner of the electronic device 100 being aware. In this case, the RA daemon provided in the second application layer 211 or the second framework layer 213 according to an embodiment may check a validity of the Authenticator ID to determine whether there is a change in the biometric data (biometric data template) of the connected electronic device 100. For example, the Authenticator ID may be a value which changes whenever biometric data is newly registered (and may not be changed when biometric data is deleted), and may be set to 0 when no biometric data is registered. The Authenticator ID may be a combination of random characters and/or numbers generated by a random number generation algorithm (e.g., an entropy-encoded random number) whenever biometric data is newly generated or updated.

The Enrollments may be a value indicating fingerprint (or iris) index information included in the biometric data template of the electronic device 100, and may be used when biometric information (a fingerprint or an iris) of the electronic device 100 is synchronized in the external device 200.

FIG. 2 is a flowchart illustrating a system including an electronic device and an external device according to an embodiment.

Pairing is performed between the electronic device 100 and the external device 200 according to an embodiment (operation 201). Although an embodiment according to FIG. 2 is described based on a connection using Bluetooth, a wireless connection may also be established using other connection methods such as WiFi, ZIGBEE, USB, or IEEE 1394.

The wireless connection may be automatically established when a user executes an application requiring biometric authentication through the external device 200, or may be manually established according to a user's functional setting.

The external device 200 according to an embodiment may determine whether there is a remote authenticator template previously stored in the external device 200 (operation 203). The remote authenticator template may include information (data) obtained by classifying device information of the electronic device 100 and/or information on a biometric data template received from the electronic device 100 into a plurality of attributes.

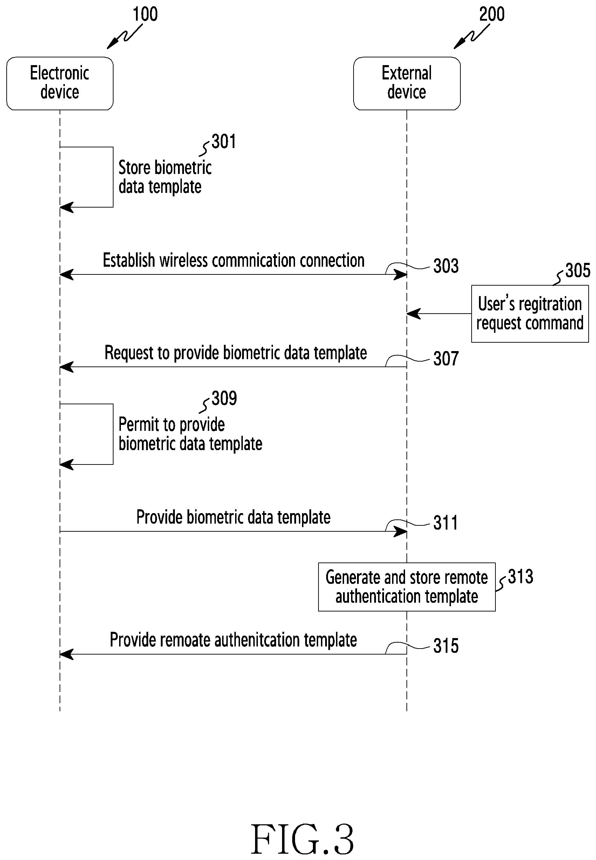

When there is no remote authenticator template in the external device 200 according to an embodiment, the electronic device 100 may provide the biometric data template to the external device 200 to perform a registration process (operation 205). The registration process will be described below with reference to FIG. 3.

When the remote authenticator template exists in the external device 200 according to an embodiment, the external device 200 may receive an application execution request from the user (operation 207). In this case, an application requested to be executed may include at least one function requiring user authentication. For example, the application may be a payment application (e.g., Samsung Pay) which requires user's fingerprint authentication in order to proceed with a payment.

The external device 200 according to an embodiment may transmit the remote authenticator template to the electronic device 100 (operation 209). More specifically, when the external device 200 transmits information on the remote authenticator template to the electronic device 100, the electronic device 100 may generate the remote authenticator template, based on the information on the remote authenticator template. Specifically, the external device 200 may transmit the remote authenticator template to the electronic device 100 so that the electronic device 100 checks a validity for the remote authenticator template in response to the execution request.

The electronic device 100 according to an embodiment may check the validity of the remote authenticator template (operation 211). For example, the electronic device 100 may compare the Authenticator ID and/or Enrollments included in the remote authenticator template with the biometric data template stored in the first memory 120 of FIG. 1 of the electronic device 100 to determine whether there is a change in biometric data in the electronic device 100.

When the remote authenticator template is not valid (No in operation 213), the electronic device 100 according to an embodiment may notify the external device 200 that biometric authentication is unavailable (operation 215). In this case, the external device 200 may provide a message indicating that the biometric authentication is unavailable through a UI such as a pop-up. In addition, when the biometric authentication is unavailable, the external device 200 according to an embodiment may provide the UI, such as the pop-up, to guide registration or update of the remote authentication template.

When the remote authenticator template is valid (Yes in operation 213), the electronic device 100 according to an embodiment may perform the biometric authentication (operation 217). In this case, the electronic device 100 may provide a UI enabling the user to input biometric data (a fingerprint or an iris).

When the user completes authentication by allowing input biometric data to be recognized through a biometric sensor, the electronic device 100 according to an embodiment may transmit to the external device 200 a signal causing an application of the external device 200 to be executed. In other words, the external device 200, which does not include a biometric recognition module, may cause the electronic device 100 to perform the biometric authentication, thereby providing a user experience (UX) equivalent to the external device 200 performing the biometric authentication.

When the remote authenticator template is valid, the electronic device 100 according to an embodiment may output, on the electronic device 100, the UI enabling the user to input the biometric data. While the UI is being output, the electronic device 100 may provide the external device 200 with a command causing the UI to be output. For example, the external device 200 may receive the command and output a message such as "Please input a fingerprint (or iris) on the connected smartphone."

FIG. 3 is a signal flow diagram illustrating a process of registering a remote authenticator template in an external device according to an embodiment.

An electronic device 100 according to an embodiment may store a biometric data template (operation 301). The biometric data template is biometric data registered by a user to perform biometric authentication in the electronic device 100. When the biometric data is fingerprint data, a biometric data template including an Authenticator ID as a value which changes whenever fingerprint information is changed during a fingerprint registration process, and Enrollments indicating indexes of the registered fingerprint information may be stored in the electronic device 100. Herein, the Authenticator ID may be composed of a 64-byte random number, and the Enrollments may be generated as an int-type array.

The electronic device 100 and the external device 200 according to an embodiment may establish a wireless communication connection (operation 303).

The external device 200 according to an embodiment may receive a user's registration request command (operation 305) while being connected to the electronic device 100 through wireless communication. For example, the user may input the registration request command to store a remote authenticator template in the external device 200 through an interface provided by the external device 200.

The external device 200 according to an embodiment may request the electronic device 100 to provide a biometric data template which is information for generating the remote authenticator template (operation 307). That is, in order to generate the remote authenticator template, the external device 200 may transmit a signal to the electronic device 100 to receive the biometric data template from the electronic device 100 in response to the user's registration request command.

When the electronic device 100 according to an embodiment receives the request from the external device 200, the electronic device 100 may determine whether to provide the biometric data template. In this case, when it is permitted by a user's selection to provide the biometric data template (operation 309), the electronic device 100 may provide the biometric data template to the external device 200 (operation 311).

The external device 200 according to an embodiment may convert the biometric data template to generate and store a remote authenticator template (operation 313).

The external device 200 according to an embodiment may complete the registration process by providing the remote authenticator template to the electronic device 100 (operation 315).

Through the aforementioned registration process, the remote authenticator template may be provided in the external device 200, and a validity check may be performed by comparing the remote authenticator template with a biometric data template stored in the electronic device 100 while the external device 200 is linked with the electronic device 100.

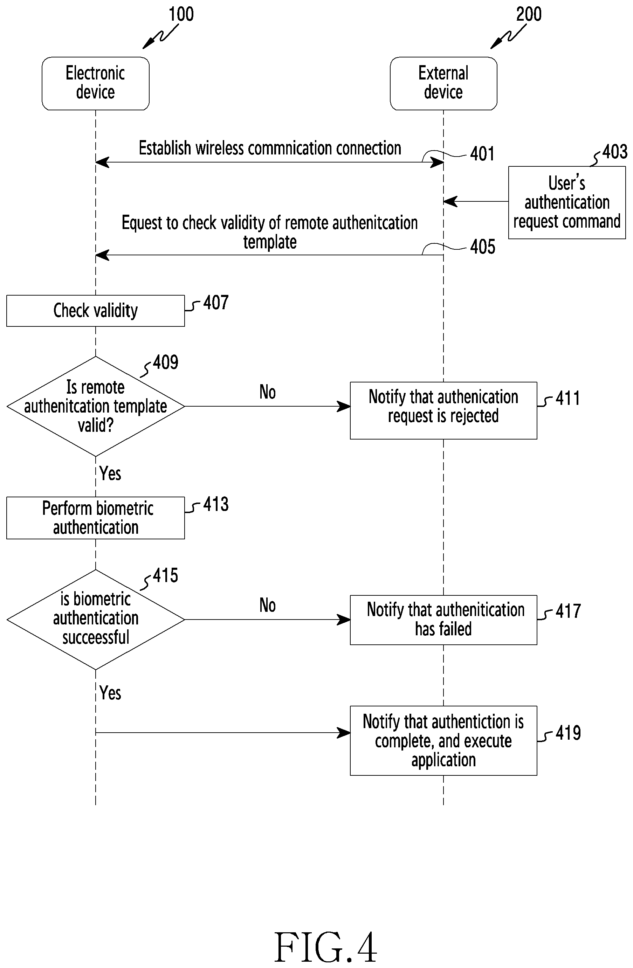

FIG. 4 is a signal flow diagram illustrating an authentication process of a system according to an embodiment.

The authentication process is a process of performing biometric authentication, depending on whether a remote authenticator template which is registered in the external device 200 matches input biometric data which is input through the electronic device 100. The system according to an embodiment checks a validity through comparison between the remote authenticator template and the biometric data template stored in the electronic device 100, thereby ensuring that the biometric data stored in the electronic device 100 is up to date.

The electronic device 100 and the external device 200 according to an embodiment may establish a wireless communication connection (operation 401). In this embodiment, the wireless communication connection may be pairing for performing biometric authentication in the external device 200.

The external device 200 according to an embodiment may receive a user's authentication request command (operation 403) while being connected to the electronic device 100 through wireless communication. For example, the user may input, to the external device 200, a command for performing a specific function (e.g., payment) in the external device 200 through an interface provided by the external device 200.

The external device 200 according to an embodiment may request the electronic device 100 to check the validity of the remote authenticator template (operation 405). In this case, the electronic device 100 may check the validity of the remote authenticator template (operation 407).

The validity check may be performed by comparing Authenticator Id/Enrollments included in the remote authenticator template received from the external device 200 with Authenticator Id/Enrollments stored in the electronic device 100 to determine whether registered biometric data currently owned by the electronic device 100 is identical to registered biometric data stored in the external device 200.

When the remote authenticator template is not valid (No in operation 409), the electronic device 100 according to an embodiment may provide the external device 200 with a signal causing the external device 200 to notify that the authentication request is rejected (operation 411). This case may include a case where the biometric data in the electronic device 100 is updated or where a user of the electronic device 100 and a user of the external device 200 do not match.

When the remote authenticator template is valid (Yes in operation 409), the electronic device 100 according to an embodiment may perform biometric authentication (operation 413). The biometric authentication may be performed when the user inputs input biometric data into the electronic device 100. The electronic device 100 according to an embodiment may perform biometric authentication, depending on whether the input biometric data matches the biometric data template.

When the biometric authentication fails (No in operation 415), the electronic device 100 according to an embodiment may provide the external device 200 with a signal causing the external device 200 to notify that the biometric authentication has failed.

When the biometric authentication is successful (Yes in operation 415), the electronic device 100 according to an embodiment may provide the external device 200 with a signal causing the external device 200 to notify that the biometric authentication is successful, and the external device 200 may execute a function of an application intended to be executed by the user (operation 419).

Meanwhile, according to an embodiment, the external device 200 may implement an application shortcut by using attribute information included in the remote authentication template. As described above, the remote authentication template includes a UUID as one of a plurality of attributes, and the UUID may include information capable of identifying the user of the electronic device 100. For example, when biometric authentication for unlocking is successful while the electronic device 100 and the external device 200 are wirelessly connected, a user-specific preference profile may be obtained through the UUID, such that a specific application corresponding to the user-specific preference profile may be executed simultaneously with the unlocking.

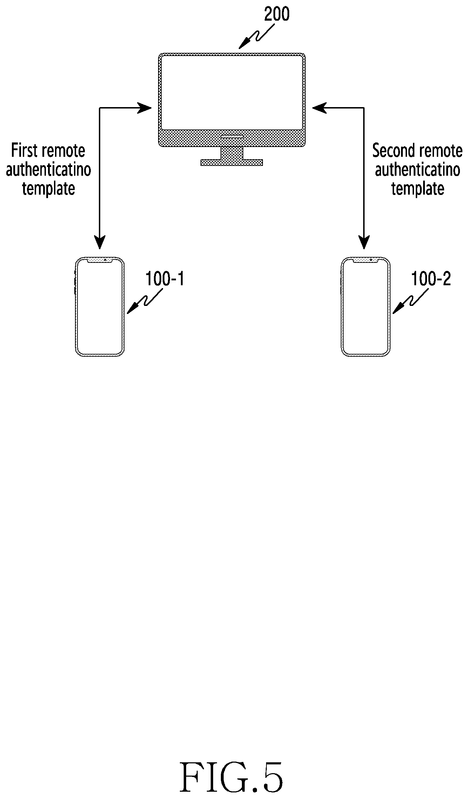

As described above, since the remote authentication template includes the UUID capable of identifying the electronic device 100, various scenarios may be implemented in a relationship between a single external device and a plurality of electronic devices. Furthermore, various scenarios may also be implemented in a relationship between a plurality of external devices and a single electronic device. This will be described below with reference to FIGS. 5 to 8.

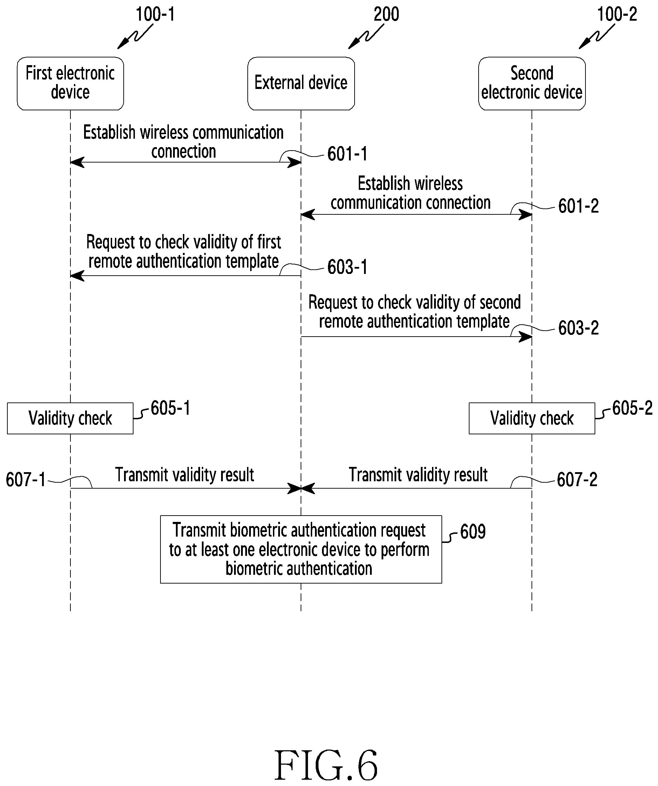

FIG. 5 illustrates a case where a system includes a plurality of electronic devices according to an embodiment. FIG. 6 is a signal flow diagram illustrating operations performed in FIG. 5.

Referring to FIG. 5, an external device 200 may establish a wireless connection with both a first electronic device 100-1 and a second electronic device 100-2. The external device 200 may store both a first remote authentication template provided by the first electronic device 100-1 and a second remote authentication template provided by the second electronic device 100-2.

Referring to FIG. 6, according to an embodiment, the external device 200 may establish a wireless communication connection with the first electronic device 100-1 (operation 601-1), and may establish a wireless communication connection with the second electronic device 100-2 (operation 601-2).

While the first electronic device 100-1 and the second electronic device 100-2 are connected through wireless communication, the external device 200 according to an embodiment may request a validity check from each of the first electronic device 100-1 and the second electronic device 100-2 (operations 603-1 and 603-2). The validity check may be requested simultaneously or at different times with respect to the first electronic device 100-1 and the second electronic device 100-2. Each of the first electronic device 100-1 and the second electronic device 100-2 may check validities (operations 605-1 and 605-2). Specifically, the first electronic device 100-1 may receive a first remote authentication template from the external device 200 and may check a validity for the first remote authentication template. The second electronic device 100-2 may check a validity for the second remote authentication template received from the external device 200.

The validity check may be performed by comparing Authenticator Id/Enrollments included in the first and second remote authentication templates received from the external device 200 with Authenticator Id/Enrollments stored in the electronic device 100 to determine whether registered biometric data currently owned by the first electronic device 100-1 and the second electronic device 100-2 is identical to the registered biometric data stored in the external device 200.

Each of the first electronic device 100-1 and the second electronic device 100-2 may transmit a validity result to the external device 200 (operations 607-1 and 607-2).

When the external device 200 receives the validity result, the external device 200 according to an embodiment may transmit a biometric authentication request to at least one electronic device to perform biometric authentication (operation 609).

For example, when validity is recognized only for the first remote authentication template between the first electronic device 100-1 and the second electronic device 100-2, the external device 200 may transmit a biometric authentication request signal only to the first electronic device 100-1.

As another example, when the validity is recognized for both the first remote authentication template and the second remote authentication template of the first electronic device 100-1 and the second electronic device 100-2, the external device 200 may transmit the biometric authentication request signal to the first electronic device 100-1 and the second electronic device 100-2. In this case, the external device 200 may provide the user with a UI enabling selection of one of the first electronic device 100-1 and the second electronic device 100-2 to perform biometric authentication.

In the aforementioned embodiment, among a plurality of electronic devices, an electronic device for which validity is recognized may be prioritized, or an electronic device to be used in biometric authentication may be determined according to a user selection. In an embodiment, in addition to UUID, DisplayName, Authenticator ID, and Enrollments, which are attributes of the remote authentication template, other attributes may be additionally included so that the user performs various biometric authentications.

The remote authentication template according to an embodiment may further include attributes related to a security level and an authentication type of an electronic device synchronized with the external device 200. The security level may be classified into a plurality of levels according to security criticality of an application executed in the external device 200. For example, the plurality of levels may be classified as strong-weak, or may be classified as first level(low)-second level(medium)-third level(high). The authentication type may include strong-level authentication types such as fingerprint authentication, face authentication, and iris authentication, and weak-level authentication types such as a password, a PIN, and a pattern.

For example, when an application executed in the external device 200 includes a payment function and requires strong-level authentication, the external device 200 may provide the user with a pop-up including a list of electronic devices supporting fingerprint authentication, face authentication, and iris authentication, based on the authentication type which is an attribute included in the remote authentication template. In this case, the validity check process of operations 603 to 607 may also be additionally performed. Such an operation is conventionally impossible in a server-client structure because a server recognizes a client anonymously, whereas it is possible in the disclosure because the external device knows information of the electronic device.

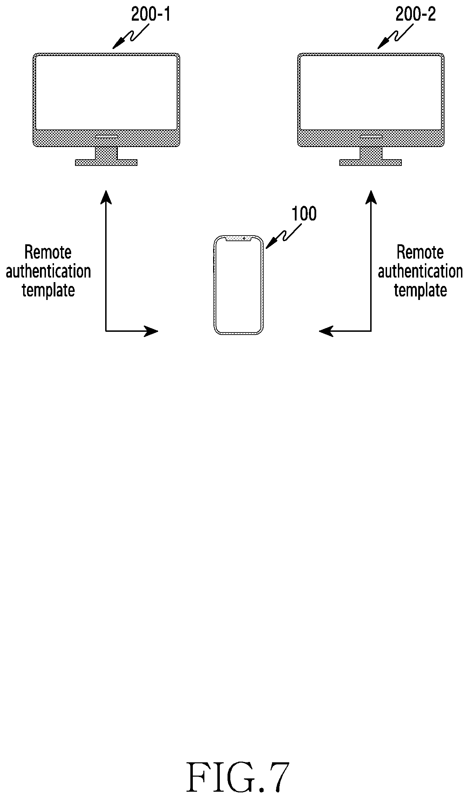

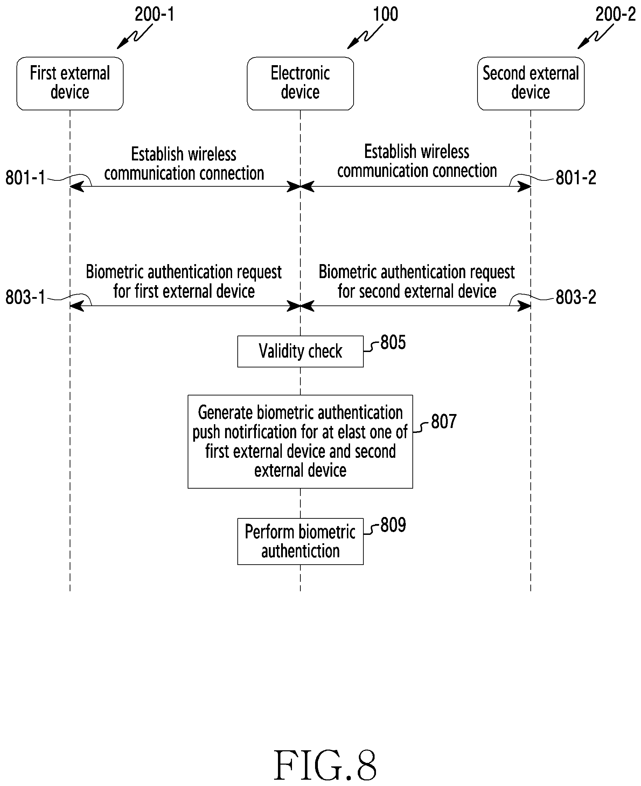

FIG. 7 illustrates a case where a plurality of external devices are included in a system according to an embodiment. FIG. 8 is a signal flow diagram illustrating operations performed in FIG. 7.

Referring to FIG. 7, an electronic device 100 may establish a wireless connection with both a first external device 200-1 and a second external device 200-2. Each of the first external device 200-1 and the second external device 200-2 may store the same remote authentication template provided by the electronic device 100.

When each of the first external device 200-1 and the second external device 200-2 transmits an authentication request to the electronic device 100 at approximately the same time, the electronic device 100 may perform biometric authentication for both the first external device 200-1 and the second external device 200-2. For example, upon receiving biometric authentication requests for the first external device 200-1 and the second external device 200-2, the electronic device 100 may allow an input for selecting the first external device 200-1 and biometric authentication for the first external device 200-1, and may allow an input for selecting the second external device 200-2 and biometric authentication for the second external device 200-2.

Referring to FIG. 7, the electronic device 100 according to an embodiment may establish a wireless communication connection with the first external device 200-1 (operation 801-1), and may establish a wireless communication connection with the second external device 200-2 (operation 801-2).

While the first external device 200-1 and the second external device 200-2 are connected through wireless communication, the electronic device 100 according to an embodiment may receive a biometric authentication request for the first external device 200-1 and a biometric authentication request for the second external device 200-2 (operations 803-1 and 803-2).

The electronic device 100 may check a validity for the remote authentication template in response to the biometric authentication request (operation 805).

The electronic device 100 may generate a biometric authentication push notification for at least one of the first external device 200-1 and the second external device 200-2. For example, when the electronic device 100 receives the biometric authentication requests for the first external device 200-1 and the second external device 200-2, the electronic device 100 may provide a user with a UI enabling reception of an input for selecting the first external device 200-1 and/or an input for selecting the second external device 200-2.

The electronic device 100 may receive input biometric data from the user and may perform biometric authentication (operation 809).

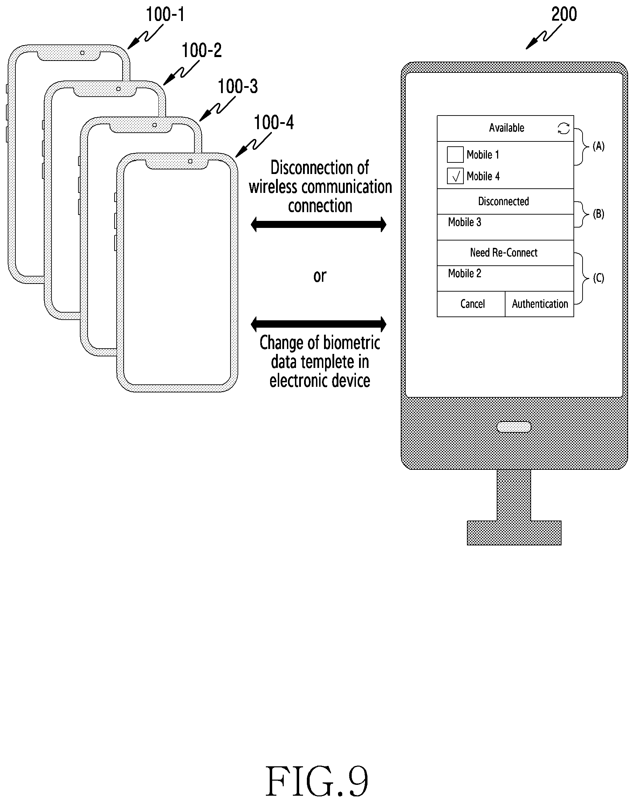

FIG. 9 illustrates a case where a failure occurs in a system according to an embodiment.

After a wireless communication connection is established between an electronic device 100 and an external device 200, the wireless connection may be disconnected before biometric authentication is performed, or a validity may not be recognized due to a change in a biometric data template in the electronic device 100. If the electronic device 100 and the external device 200 are in a one-to-one relationship, there is no option other than retrying the wireless connection or updating the biometric data template, whereas if the electronic device 100 and the external device 200 are in an N-to-one relationship, the aforementioned issue may be resolved using attribute information included in a remote authentication template.

For example, while a plurality of electronic devices 100-1 to 100-4 are wirelessly connected to the external device 200, the electronic device 200 according to an embodiment may provide a UI according to FIG. 9.

In FIG. 9, (A) indicates information of a state where the validity is recognized for the first electronic device 100-1 and the fourth electronic device 100-4 and thus biometric authentication is available, (B) indicates information of a state where wireless communication is disconnected between the third electronic device 100-3 and the external device 200, and (C) indicates information of a state where a biometric data template of the second electronic device 100-2 is changed and thus re-registration is required.

The external device 200 according to an embodiment may provide a UI including state information of the plurality of electronic devices 100-1 to 100-4, and a user may select an electronic device into which input biometric data for biometric authentication is to be input by referring to the state information provided by the external device 200.

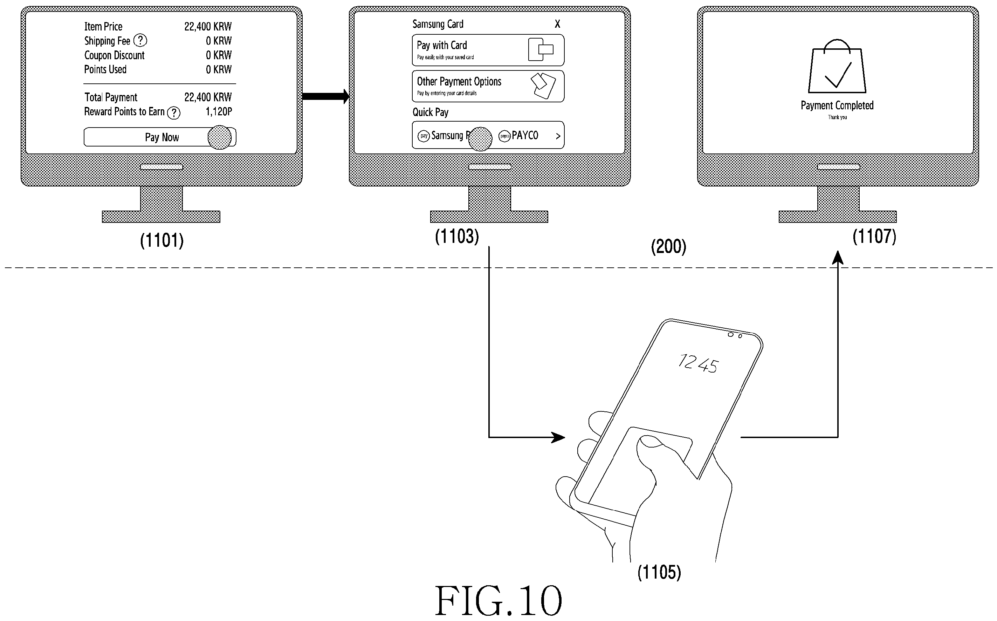

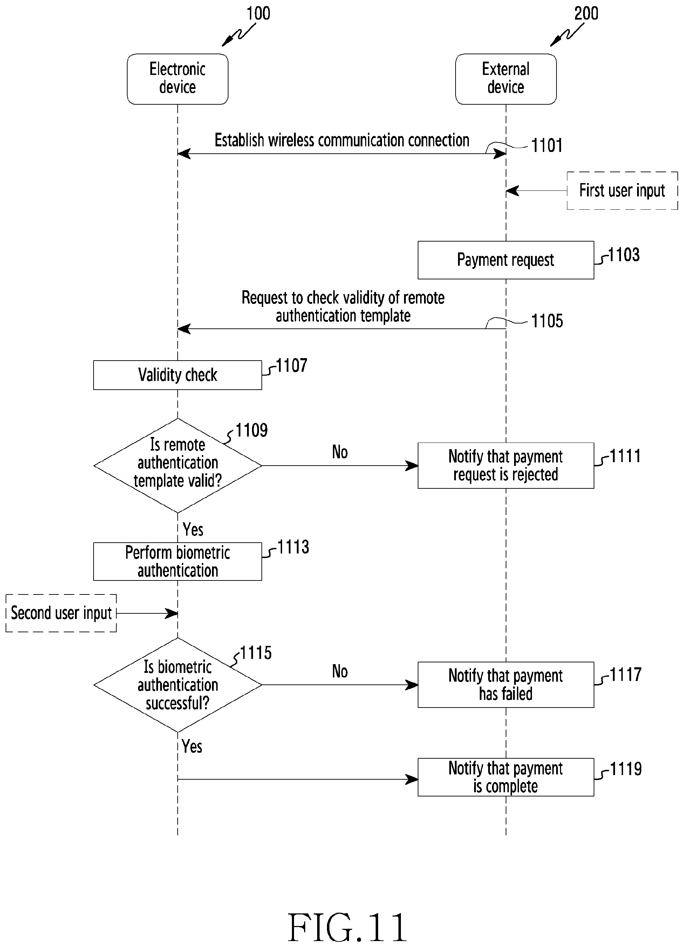

FIG. 10 illustrates a payment processing procedure in a system according to an embodiment, and FIG. 11 is a signal flow diagram of a payment system according to an embodiment.

For example, when an external device 200 is a desktop which is not provided with a fingerprint recognition module (or an iris recognition module), in order to perform a payment in the desktop, a user may input personal information (a phone number or the like) through the desktop, and an electronic device 100 may receive an authentication request from a server such that the user completes the payment based on the input personal information. In FIG. 10, in operation 1105, the server causes the electronic device 100 to generate a push message such that the user performs fingerprint authentication through the electronic device 100.

According to an embodiment of the disclosure, the external device 200 may perform the payment without causing the server to transmit an authentication request to the electronic device 100. For example, the external device 200 may perform biometric authentication for payment through a validity check request for the electronic device 100.

Referring to FIG. 11, the electronic device 100 and the external device 200 according to an embodiment may establish a wireless communication connection (operation 1101).

The external device 200 according to an embodiment may receive a first user input while being connected to the electronic device 100 through wireless communication. For example, the first user input may be a user input for a payment requested by the external device 200 through a payment application (e.g., Samsung Pay). The external device 200 may perform a payment request in response to the first user input (operation 1103). The user may input to the external device 200 a command causing the external device 200 to input a specific function (e.g., a payment) through an interface provided by the external device 200.

The external device 200 according to an embodiment may request the electronic device 100 to check a validity of a remote authentication template (operation 1105). In this case, the electronic device 100 may check the validity of the remote authentication template (operation 1107), thereby ensuring that fingerprint data (or iris data) stored in the external device 200 is up to date.

According to an embodiment, the validity check may be performed by comparing Authenticator Id/Enrollments included in the remote authentication template received from the external device 200 with Authenticator Id/Enrollments stored in the electronic device 100 to determine whether registered fingerprint data currently owned by the electronic device 100 is identical to registered fingerprint data stored in the external device 200.

When the remote authentication template is not valid (No in operation 1109), the electronic device 100 according to an embodiment may provide the external device 200 with a signal causing the external device 200 to notify that the payment request is rejected (operation 1111). This case may include a case where fingerprint data in the electronic device 100 is updated or where the user of the electronic device 100 does not match the user of the external device 200.

When the remote authentication template is valid (Yes in operation 1109), the electronic device 100 according to an embodiment may perform biometric authentication (operation 1113). The biometric authentication may be performed when the user inputs input biometric data, which is a second user input, into the electronic device 100. According to an embodiment, the electronic device 100 may perform biometric authentication, depending on whether the input fingerprint data matches the biometric data template.

When the biometric authentication fails (No in operation 1115), the electronic device 100 according to an embodiment may provide the external device 200 with a signal causing the external device 200 to notify that the payment has failed (operation 1117).

When the biometric authentication is successful (Yes in operation 1115), the electronic device 100 according to an embodiment may provide the external device 200 with a signal causing the external device 200 to notify that the payment is complete (operation 1119, see 1107 of FIG. 10).

Meanwhile, the biometric authentication process based on the validity check may also be applied when the external device 200 is a head mounted display (HMD) such as a video see-through (VST) device. In order for the VST device, which does not include a fingerprint module in general and is capable of performing only iris recognition, to perform authentication while being worn by a user other than a registered user, a situation may occur in which the VST device needs to be handed back to the registered user for authentication. In this case, when the VST device is linked with the electronic device and the registered user is capable of performing biometric authentication (e.g., fingerprint authentication) through the electronic device, the inconvenient process in which another user has to hand the VST device back to the registered user may be omitted.

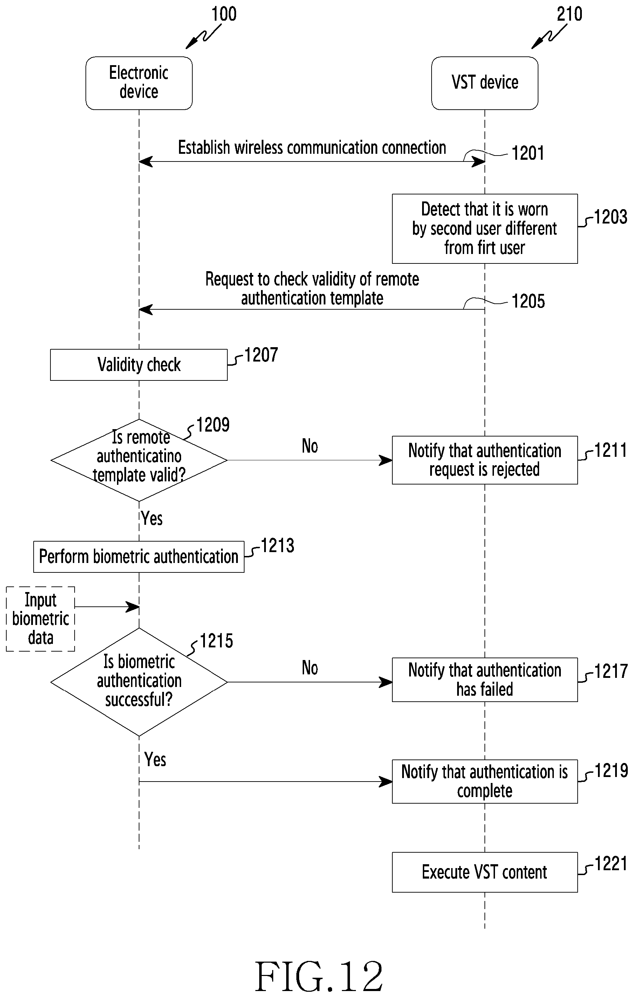

FIG. 12 is a signal flow diagram of a system, when an external device is a VST device, according to an embodiment.

Referring to FIG. 12, an electronic device 100 and a VST device 210 according to an embodiment may establish a wireless communication connection (operation 1201).

While the VST device 210 according to an embodiment is connected to the electronic device 100 through wireless communication, the VST device 210 may detect that a second user different from a first user is wearing the VST device 210 (operation 1203). Herein, the first user may be a user registered in the electronic device 100 and the VST device 210, and may correspond to a user for whom biometric authentication may be successfully performed on each device. The second user may be a guest for the VST device 210, and may correspond to a user who has not registered his or her biometric data in the VST device 210.

The VST device 210 according to an embodiment may request the electronic device 100 to check a validity of a remote authentication template (operation 1205). In this case, the electronic device 100 may check the validity of the remote authentication template (operation 1207), thereby ensuring that biometric data (fingerprint data or iris data) stored in the VST device 210 is up to date.

According to an embodiment, the validity check may be performed by comparing Authenticator Id/Enrollments included in the remote authentication template received from the VST device 210 with Authenticator Id/Enrollments stored in the electronic device 100 to determine whether registered biometric data currently owned by the electronic device 100 is identical to registered biometric data stored in the external device 200.

When the remote authentication template is not valid (No in operation 1209), the electronic device 100 according to an embodiment may provide the VST device 210 with a signal causing the VST device 210 to notify that the authentication request is rejected (operation 1211). This case may include a case where biometric data in the electronic device 100 is updated.

When the remote authentication template is valid (Yes in operation 1209), the electronic device 100 according to an embodiment may perform biometric authentication (operation 1213). The biometric authentication may be performed when the first user inputs input biometric data (e.g., fingerprint data or iris data) into the electronic device 100. The electronic device 100 according to an embodiment may perform biometric authentication, depending on whether the input biometric data matches the biometric data template.

When the biometric authentication fails (No in operation 1215), the electronic device 100 according to an embodiment may provide the VST device 210 with a signal causing the VST device 210 to notify that the authentication has failed (operation 1217).

When the biometric authentication is successful (Yes in operation 1215), the electronic device 100 according to an embodiment may provide the VST device 210 with a signal causing the VST device 210 to notify that that authentication is complete (operation 1219). In addition, the VST device 210 may provide content to the second user by executing VST content (operation 1221).

Fig. 13 is a block diagram illustrating an electronic device 1301 in a network environment 1300 according to various embodiments. Referring to Fig. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module(SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to one embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thererto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, a HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to one embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as BluetoothTM, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

A system according to an embodiment may include an electronic device having a biometric recognition module and an external device connected to the electronic device. While the electronic device and the external device are connected through wireless communication, the electronic device may provide the external device with a biometric data template obtained from the biometric recognition module. The external device may store a remote authentication template obtained by assigning a plurality of attributes to the biometric data template. The external device may transmit the remote authentication template to the electronic device in response to an application execution request from a user. The electronic device may check a validity of the remote authentication template, based on a comparison between the remote authentication template and the biometric data template. The external device may request biometric authentication from the electronic device, based on the validity checked from the electronic device, and execute the application, based on a result of biometric authentication of the electronic device.

In the system according to an embodiment, the external device may generate a signal causing the electronic device to perform biometric authentication when the remote authentication template is valid. The electronic device according to an embodiment may output a user interface enabling reception of input biometric data from the user in response to the signal.

In the system according to an embodiment, the external device may notify that the biometric authentication is unavailable when the remote authentication template is not valid.

In the system according to an embodiment, the remote authentication template may include first data corresponding to a first attribute for identifying the electronic device, second data corresponding to a second attribute indicating that a biometric data template registered in the electronic device is changed, and third data corresponding to a third attribute indicating an index of the registered biometric data template.

In the system according to an embodiment, the electronic device may receive the second data and the third data of the remote authentication template, and check a validity, based on a comparison between the biometric data template and each of the second data and the third data.

In the system according to an embodiment, while being connected through wireless communication with a first electronic device in which a first biometric data template is stored and a second electronic device in which a second biometric data template is stored, the external device may transmit a first remote authentication template corresponding to the first biometric data template and a second remote authentication template corresponding to the second biometric data template respectively to the first electronic device and the second electronic device, in response to the application execution request from the user, receive a validity check result from each of the first electronic device and the second electronic device, and transmit a biometric authentication request to at least one of the first electronic device and the second electronic device such that biometric authentication is performed based on respective validities.

In the system according to an embodiment, while being connected through wireless communication to a first external device in which a first remote authentication template is stored and a second external device in which a second remote authentication template is stored, the electronic device may receive a biometric authentication request from the first external device and the second external device, and output a biometric authentication push notification for at least one of the first external device and the second external device, based on validities of the first remote authentication template and the second remote authentication template.

In the system according to an embodiment, the remote authentication template may further include fourth data corresponding to a fourth attribute indicating a category of authentication type. While being connected through wireless communication with the first electronic device and the second electronic device, the external device according to an embodiment may transmit a biometric authentication request to any one of the first electronic device and the second electronic device, based on a security level of the application.

In the system according to an embodiment, while a payment application is being executed, the external device may request a validity check from the electronic device, in response to a user input requesting a payment, and transmit a biometric authentication request signal requesting biometric authentication from the electronic device, based on the validity checked from the electronic device. The electronic device according to an embodiment may output a user interface for biometric authentication, in response to the biometric authentication request signal.

In the system according to an embodiment, the electronic device may include a memory storing a first biometric data template of a first user. The external device according to an embodiment may include a video see-through (VST) device in which a first remote authentication template corresponding to the first biometric data template is stored. While a VST application is being executed, the external device according to an embodiment may request a validity check from the electronic device, in response to detecting that a second user different from the first user is wearing the VST device, and transmit a biometric authentication request signal requesting biometric authentication from the electronic device, based on the validity checked from the electronic device. The electronic device according to an embodiment may output a user interface for biometric authentication, in response to the biometric authentication request signal.

An external device according to an embodiment may include a processor and a memory storing at least one instruction executable by the processor. The at least one instruction may cause the external device to receive, from the electronic device, a biometric data template obtained from the biometric recognition module, store a remote authentication template obtained by assigning a plurality of attributes to the biometric data template, transmit the remote authentication template to the electronic device in response to an application execution request from a user, receive, from the electronic device, a validity check result of the remote authentication template based on a comparison between the remote authentication template and the biometric data template, and request biometric authentication from the electronic device, based on the validity, and execute the application, based on a result of biometric authentication of the electronic device.

The at least one instruction according to an embodiment may generate a signal causing the electronic device to perform biometric authentication when the remote authentication template is valid.

The at least one instruction according to an embodiment may notify that the biometric authentication is unavailable when the remote authentication template is not valid.

The remote authentication template according to an embodiment may further include first data corresponding to a first attribute for identifying the electronic device, second data corresponding to a second attribute indicating that a biometric data template registered in the electronic device is changed, and third data corresponding to a third attribute indicating an index of the registered biometric data template.

The at least one instruction according to an embodiment may be configured to receive the second data and the third data of the remote authentication template, and check a validity, based on a comparison between the biometric data template and each of the second data and the third data.

The at least one instruction according to an embodiment may be configured to, while being connected through wireless communication with a first electronic device in which a first biometric data template is stored and a second electronic device in which a second biometric data template is stored, transmit a first remote authentication template corresponding to the first biometric data template and a second remote authentication template corresponding to the second biometric data template respectively to the first electronic device and the second electronic device, in response to the application execution request from the user, receive a validity check result from each of the first electronic device and the second electronic device, and transmit a biometric authentication request to at least one of the first electronic device and the second electronic device such that biometric authentication is performed based on respective validities.

An external device according to an embodiment may include a first external device and a second external device. At least one instruction according to an embodiment may provide control the electronic device such that, while the electronic device is connected through wireless communication to the first external device in which a first remote authentication template is stored and the second external device in which a second remote authentication template is stored, the first external device and the second external device transmit a biometric authentication request to the electronic device, and a biometric authentication push notification is output for at least one of the first external device and the second external device, based on validities of the first remote authentication template and the second remote authentication template.

The remote authentication template according to an embodiment may further include fourth data corresponding to a fourth attribute indicating a category of authentication type. The at least one instruction according to an embodiment may be configured to, while being connected through wireless communication with the first electronic device and the second electronic device, transmit a biometric authentication request to any one of the first electronic device and the second electronic device, based on a security level of the application.

The at least one instruction according to an embodiment may be configured to, while a payment application is being executed, the external device, request a validity check from the electronic device, in response to a user input requesting a payment, and transmit a biometric authentication request signal requesting biometric authentication from the electronic device, based on the validity checked from the electronic device.

A recording medium according to an embodiment may be a non-transitory computer-readable recording medium storing instructions which, when executed by at least one processor, cause the at least one processor to perform configured operations. The operations may be configured to receive, from the electronic device, a biometric data template obtained from the biometric recognition module, store a remote authentication template obtained by assigning a plurality of attributes to the biometric data template, transmit the remote authentication template to the electronic device in response to an application execution request from a user, receive, from the electronic device, a validity check result of the remote authentication template based on a comparison between the remote authentication template and the biometric data template, and request biometric authentication from the electronic device, based on the validity, and execute the application, based on a result of biometric authentication of the electronic device.

## Claims

1. A system comprising an electronic device having a biometric recognition module and an external device connected to the electronic device,
wherein, while the electronic device and the external device are connected through wireless communication:
the electronic device provides the external device with a biometric data template obtained from the biometric recognition module;
the external device stores a remote authentication template obtained by assigning a plurality of attributes to the biometric data template;
the external device transmits the remote authentication template to the electronic device in response to an application execution request from a user;
the electronic device checks a validity of the remote authentication template, based on a comparison between the remote authentication template and the biometric data template; and
the external device requests biometric authentication from the electronic device, based on the validity checked from the electronic device, and executes the application, based on a result of biometric authentication of the electronic device.

2. The system of claim 1,
wherein the external device is configured to generate a signal causing the electronic device to perform biometric authentication when the remote authentication template is valid; and
wherein the electronic device is configured to output a user interface enabling reception of input biometric data from the user in response to the signal.

3. The system of claim 2, wherein the external device is configured to notify that the biometric authentication is unavailable when the remote authentication template is not valid.

4. The system of claim 1, wherein the remote authentication template comprises:
first data corresponding to a first attribute for identifying the electronic device;
second data corresponding to a second attribute indicating that a biometric data template registered in the electronic device is changed; and
third data corresponding to a third attribute indicating an index of the registered biometric data template.

5. The system of claim 4, wherein the electronic device is configured to:
receive the second data and the third data of the remote authentication template; and
check a validity, based on a comparison between the biometric data template and each of the second data and the third data.

6. The system of claim 1, wherein, while being connected through wireless communication with a first electronic device in which a first biometric data template is stored and a second electronic device in which a second biometric data template is stored, the external device is configured to:
transmit a first remote authentication template corresponding to the first biometric data template and a second remote authentication template corresponding to the second biometric data template respectively to the first electronic device and the second electronic device, in response to the application execution request from the user;
receive a validity check result from each of the first electronic device and the second electronic device; and
transmit a biometric authentication request to at least one of the first electronic device and the second electronic device such that biometric authentication is performed based on respective validities.

7. The system of claim 1, wherein, while being connected through wireless communication to a first external device in which a first remote authentication template is stored and a second external device in which a second remote authentication template is stored, the electronic device is configured to:
receive a biometric authentication request from the first external device and the second external device; and
output a biometric authentication push notification for at least one of the first external device and the second external device, based on validities of the first remote authentication template and the second remote authentication template.

8. The system of claim 4,
wherein the remote authentication template further comprises fourth data corresponding to a fourth attribute indicating a category of authentication type, and
wherein, while being connected through wireless communication with the first electronic device and the second electronic device, the external device is configured to transmit a biometric authentication request to any one of the first electronic device and the second electronic device, based on a security level of the application.

9. The system of claim 1,
wherein, while a payment application is being executed, the external device is configured to:
request a validity check from the electronic device, in response to a user input requesting a payment; and
transmit a biometric authentication request signal requesting biometric authentication from the electronic device, based on the validity checked from the electronic device, and
wherein the electronic device is configured to output a user interface for biometric authentication, in response to the biometric authentication request signal.

10. The system of claim 1,
wherein the electronic device comprises a memory storing a first biometric data template of a first user,
wherein the external device comprises a video see-through (VST) device in which a first remote authentication template corresponding to the first biometric data template is stored, and is configured to, while a VST application is being executed:
request a validity check from the electronic device, in response to detecting that a second user different from the first user is wearing the VST device; and
transmit a biometric authentication request signal requesting biometric authentication from the electronic device, based on the validity checked from the electronic device, and
wherein the electronic device is configured to output a user interface for biometric authentication, in response to the biometric authentication request signal.

11. An external device connectable to an electronic device having a biometric recognition module through wireless communication, comprising:
a processor; and
a memory storing at least one instruction executable by the processor,
wherein the at least one instruction causes the external device to:
receive, from the electronic device, a biometric data template obtained from the biometric recognition module;
store a remote authentication template obtained by assigning a plurality of attributes to the biometric data template;
transmit the remote authentication template to the electronic device in response to an application execution request from a user;
receive, from the electronic device, a validity check result of the remote authentication template based on a comparison between the remote authentication template and the biometric data template; and
request biometric authentication from the electronic device, based on the validity, and execute the application, based on a result of biometric authentication of the electronic device.

12. The external device of claim 11, wherein the at least one instruction is configured to generate a signal causing the electronic device to perform biometric authentication when the remote authentication template is valid.

13. The external device of claim 12, wherein the at least one instruction is configured to notify that the biometric authentication is unavailable when the remote authentication template is not valid.

14. The external device of claim 11, wherein the remote authentication template comprises:
first data corresponding to a first attribute for identifying the electronic device; second data corresponding to a second attribute indicating that a biometric data template registered in the electronic device is changed; and third data corresponding to a third attribute indicating an index of the registered biometric data template.

15. The external device of claim 14, wherein the at least one instruction is configured to:
receive the second data and the third data of the remote authentication template; and
check a validity, based on a comparison between the biometric data template and each of the second data and the third data.
